(19) **Europäisches Patentamt / European Patent Office / Office européen des brevets**

(11) **EP 2 019 295 A1**

(12) **EUROPEAN PATENT APPLICATION**

(43) Date of publication:
**28.01.2009 Bulletin 2009/05**

(51) Int Cl.:
**G01F 1/84** *(2006.01)*     **G01F 15/02** *(2006.01)*
**G01F 25/00** *(2006.01)*

(21) Application number: **07113134.6**

(22) Date of filing: **25.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nederlandse Organisatie voor Toegepast-Natuurwetenschappelijk Onderzoek TNO 2628 VK Delft (NL)**

(72) Inventors:
• **Alberts, Garrelt Jan Niels
  2612SZ Delft (NL)**
• **Braal, Frans Marinus
  2548SG Den Haag (NL)**

(74) Representative: **van Loon, C.J.J.
  Vereenigde
  Johan de Wittlaan 7
  2517 JR Den Haag (NL)**

(54) **Calibrated Coriolis mass flow meter**

(57)     Parallel mass flow through a first and second tube part is used to perform a Coriolis mass flow measurement. The first and second tube are coupled by a mode separation connection that obstructs relative movement of the tube parts in mutually opposite directions, while allowing movement of the tube parts in a same direction. The mass flow measurement is calibrated by multiplying a measured quantity with a calibration factor that is determined by means of a reference mass flow at a time of calibration. The calibration factor at the time of measurement is corrected for external influences by measuring compression amplitude of the mode separation connection due to the vibration at the time of measurement and at the time of calibration. The correction factor corresponds to a square root of a ratio of terms that change by amounts proportional to squares of the compression amplitudes of the mechanical connection at the time of calibration and measurement respectively.

Fig.1

**Description**

The invention relates to a Coriolis mass flow meter and to a method of operating such a mass flow meters.

A Coriolis mass flow meter is known from European patent application No. 1623192. As is well known, a Coriolis mass flow meter uses the effect that fluid flowing in a tube transports momentum, so that position dependence of the momentum results in local momentum changes, i.e. forces, which are called Coriolis forces. This effect results in an observable coupling between oscillation modes of the tube in proportion to mass flow in the tube. Mass flow can be measured for example by exerting a force on the tube or an assembly of tubes to excite one oscillation mode, and detecting the strength of vibrations in another oscillation mode that are excited due coupling caused by fluid flow. In one example a force is exerted to excite an even oscillation mode, in which tube displacements are the same on opposite sides of a central plane of a tube assembly. In this case, fluid flow gives rise to excitation of an odd oscillation mode, in which the tube displacement are mutually opposite on opposite sides of the central plane. The strength of vibration in the odd mode may be determined from measurements of phase differences between vibrations of different points of the tube.

The measurable effect on the oscillations, such as the phase difference, depends on mass flow of the fluid, but also on tube parameters, such as mass, stiffness and damping of the tube. Unfortunately, the latter parameters may depend on external conditions, such as temperature. Various approaches can be taken to remove the effect of such dependencies. One way is to fit to a vibration model of the tube that has stiffness, mass and damping as free parameters to the measurements of vibrations at a large number of positions of the tube. Thus the fitted parameters may track variations due to variable external conditions. However, this method may not be robust if the model does not accurately describe the tube. Also it requires considerable computational efforts to perform mass flow measurements.

In another approach to remove the effect of such dependencies, calibrations of the relation between mass flow and the measured response of the tube are performed at different temperatures beforehand during calibration. Temperature is measured during the actual measurement and mass flow is determined using the calibration constant for the measured temperature. However, there may be more external conditions than just temperature that affect calibration. Accounting for a plurality of such conditions would require a vast amount of calibration measurements. Moreover, the risk would still exist that not all conditions that have a relevant effect are included in the calibration data.

Among others, it is an object to provide for a Coriolis mass flow meter wherein an improved calibration is realized.

A Coriolis mass flow meter according to claim 1 is provided. With such a Coriolis mass flow meter an effective calibration factor between a parameter that varies with mass flow, such as the phase difference, may be corrected using a measured compression and expansion amplitude at a connection between different tube parts that is used to obstruct, but not entirely block, asymmetric motion of the tube parts. The compression and expansion amplitude is measured under the measurement and calibration conditions and used in a computation that effectively corrects the calibration factor.

In an embodiment the correction factor corresponds to a square root of a ratio of terms, wherein the terms change by amounts proportional to squares $U^2$, $Uc^2$ of the compression amplitudes $U$, $Uc$ of the mechanical connection under the measurement and calibration conditions respectively, i.e. wherein the terms in the ratio change as $pU^2+q$, $p'Uc^2+q'$ wherein $p$, $p'$ and $q$, $q'$ are not computed dependent on $U$ or $Uc$.

In an embodiment the correction factor corresponds to a ratio $U/Uc$ of the compression amplitudes $U$ and $Uc$ of the mechanical connection under the measurement and calibration conditions respectively. This provides an accurate correction if a vibration mode excited due to the mass flow has a high resonance quality factor.

In a further embodiment, the calibration factor is corrected according to $C^2= Cc^2 * X/Xc$, wherein the terms $X$ and $Xc$ vary to

$$X = R1^2\ (f^2\text{-}fo^2)^{\,2}\ /f^4 + R2^2\ A^{2*}fo^2$$

$$Xc = R1c^2\ (fc^2\text{-}foc^2)^{\,2}\ /f^4 + R2c^2\ A^{2*}foc^2$$

of which $R1$ and $R1c$ are proportional to compression amplitude of the mechanical connection, $R2$ and $R2c$ are proportional to a vibration amplitude of the first and/or second tube part and the other parameters are explained in the description of the exemplary embodiments.

These and other objects and advantageous aspects will become apparent form a description of exemplary embodiments, using the following figure

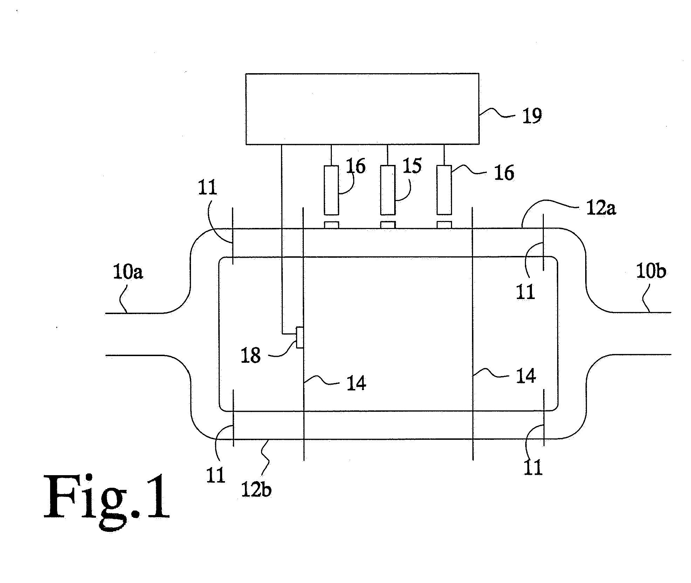

Figure 1 shows a Coriolis mass flow measurement configuration Figure 1 shows a Coriolis mass flow measurement configuration. The configuration comprises an inlet tube part 10a, an outlet tube part 10b and a first and second intermediate tube part 12a, b coupled in parallel between the inlet and outlet tube parts 10a, b. Clamps 11 are provided to fix ends of first and second intermediate tube part 12a, b to a fixed external frame (not shown).

Furthermore, the configuration comprises mode separation plates 14, an actuator 15, vibration sensors 16, a strain gauge 18 and a control circuit 19. Mode separation plates 14 are each attached to first and second intermediate tube part 12a,b. Actuator 15 is configured to exert a force on first intermediate tube part 12a, to accelerate first intermediate tube part 12a relative to the fixed external frame (not shown). Actuator 15 may be attached between the tube parts 12a, b, so as to exert a force between the tube parts. Alternatively actuator 15 may be attached to an external frame, so as to exert a force on one tube part only. Vibration sensors 16 are configured to measure movement of first intermediate tube part 12a, b relative to the fixed external frame (not shown) at mutually different positions along first intermediate tube part 12a. Strain gauge 18 is located on one of mode separation plates 14. Control circuit 19 is coupled to actuator 15, vibration sensors 16 and strain gauge

In operation, fluid flows from inlet tube part 10a to outlet tube part 10b through first and second intermediate tube part 12a,b. Control circuit 19 causes actuator 15 to excite vibrations in first and second intermediate tube part 12a, b. Clamps 11 keep the ends of the intermediate tube parts 12a,b substantially fixed to the external frame during vibration. Thus, the vibrating movements of first and second intermediate tube part 12a,b relative to the fixed external frame (not shown) are possible between clamps 11. Control circuit 19 reads out resulting sensor signals from vibration sensors 16 and strain gauge 18 and computes mass flow from the results.

Actuator 15 may comprise an inductor coil and a permanent magnet placed on respective ones of the fixed external frame (not shown) and first intermediate tube part 12a, so that the magnet is in the magnetic field produced by the inductor coil. As shown, the magnet is attached to first intermediate tube part 12a. Alternatively, the inductor coil may be attached to first intermediate tube part 12a. Instead of a permanent magnet an electromagnet may be used. Control circuit 19 supplies an electric current, I, through the inductor coil, which varies sinusoidally as a function of time at a frequency selected by control circuit 19. Thus, a sinusoidal force at the selected frequency is applied to first intermediate tube part 12a. In an embodiment the force is exerted substantially at a central point of first intermediate tube part 12a at which first intermediate tube part 12a has a plane of mirror symmetry perpendicular to the mass flow direction.

Vibration sensors 16, likewise, may each comprise an inductor coil and a permanent magnet placed on respective ones of the fixed external frame (not shown) and first intermediate tube part 12a, so that the magnet is in the magnetic field produced by the inductor coil. In response to movement of first intermediate tube part 12a an induction voltage is generated in the inductor coil. Control circuit 19 measures this induction voltage. In an embodiment vibration sensors 16 are located to sense movement at mutually opposite positions relative to the plane of mirror symmetry.

In general, vibrations of first and second intermediate tube part 12a,b may exhibit a plurality of vibration modes. Each vibration mode corresponds to a particular pattern of vibration amplitude factor and phase values as a function of position on first and second intermediate tube part 12a,b. The amplitude factors and phase define the relative amplitude and phase of the vibrations at the different positions when the tube parts vibrate in the vibration mode. Each vibration mode has its own resonance frequency, which depends on parameters of the tube.

Mode separation plates 14, which are not connected to the fixed external frame (not shown), serve to couple vibrations in the first and second intermediate tube part 12a,b in a way that distinguishes between symmetric and asymmetric vibration modes. Typically the vibration modes include symmetric modes, wherein the first and second intermediate tube part 12a,b move in the same direction during vibration, with the same amplitude factor and phase at corresponding positions along first and second intermediate tube part 12a,b. The vibration modes also include asymmetric modes, wherein the first and second intermediate tube part 12a,b move in mutually opposite directions.

Without mode separation plates 14 first and second intermediate tube part 12a,b would vibrate independently of each other. In this case, the symmetric and asymmetric modes would have the same resonance frequency and the same amplitude factors as a function of position along the tube parts. Mode separation plates 14 couples vibrations of the first and second intermediate tube part 12a,b. Each mode separation plate 14 is attached substantially to corresponding positions at first and second intermediate tube part 12a,b, i.e. positions that would have the same amplitude factor and phase in a symmetric mode even without mode separation plates 14. Thus, mode separation plates 14 have little or no effect on the symmetric modes. It may be noted that, in contrast to clamps 11, mode separation plates 14 do not obstruct, or hardly obstruct, vibration of intermediate tube parts 12a,b wherein the intermediate tube parts 12a,b move symmetrically.

In contrast, in asymmetric modes the movement of the positions to which any mode separation plate 14 is attached would be in mutually opposite directions if the mode separation plates 14 were absent. In the presence of a mode separation plate 14, the asymmetric mode involves compression and extension of the mode separation plate 14. Thus, the stiffness of mode separation plates 14 is an important factor in the vibration behavior of the asymmetric modes. As a result the resonance frequencies of the asymmetric modes are typically higher than those of the symmetric modes. Although two mode separation plates 14 are shown, any number (one or more) may be used for this purpose, each connected to corresponding positions on intermediate tube part 12a,b. Instead of plates 14 any other connection may be used that obstructs asymmetric vibration without making it entirely impossible.

Strain gauge 18 senses compression and stretching of one of mode separation plates 14 as a result of vibration.

Typically the compression and stretching is due to vibration in an asymmetric mode. Compression and stretching results in resistance changes of stain gauge 18. Control circuit 19 measures the resistance changes. Strain gauge 18 is attached to separation plate 14 in a direction to sense at least a component of compression and stretching from first intermediate tube part 12a to second intermediate tube part 12b. In an embodiment strain gauge 18 is attached to separation plate 14 substantially midway first and second intermediate tube part 12a,b. However, any position on mode separation plate 14 may be used.

Coriolis mass flow measurement is based on the effect of mass flow Q on the vibration of the tube parts 12a, b. In terms of vibration modes, different vibration modes are coupled to a degree that is proportional to this mass flow Q. The coupling has the effect that, when an excitation force is applied that would excite one mode in the absence of mass flow (when Q=0), another mode is excited in proportion to the mass flow Q. Thus, from measuring the response to an excitation force, mass flow Q can be determined, if a calibration factor between the observed response and mass flow Q is known. Any response that depends on mass flow may be used.

In an embodiment control circuit 19 computes fluid mass flow Q through first and second intermediate tube part 12a,b from a phase difference between vibrations sensed by vibration sensors 16. Control circuit 19 supplies a current through the inductor coil of actuator 15 at a frequency corresponding substantially to the frequency a basic vibration mode wherein vibrations of first intermediate tube part 12a are symmetric about its plane of mirror symmetry (symmetry between the upstream and downstream directions). Control circuit 19 detects the phase difference between the sensor output signals from vibration sensors 16, expressed as a time difference dT between the time points where the sensors detect the same phase. In one example, the difference may be measured between the time points at which the sensors 16 detect the tube to be in equilibrium position. In another example, the difference may be measured between the time points at which the sensors 16 detect the tube to have zero speed. Control circuit 19 multiplies the time difference with a calibration factor C to obtain the mass flow Q=C*dT.

In an embodiment control circuit 19 adapts the calibration factor dependent on additional supporting measurements. The adaptation of the calibration factor C may be determined from measurements of one or more of the output signal amplitude U of strain gauge 18, the excitation current Ia through the inductor coil of actuator 15, the induction voltage Vs of the inductor coil of at least one of vibration sensors 16 and resonance frequency shift df. Control circuit 19 may determine resonance frequency shift df by determining the excitation frequency of actuator 15 at which first intermediate tube part 12a vibrates in a quarter cycle out of phase with the force applied by actuator 15, and/or at which it vibrates with maximum amplitude.

A reference calibration factor Co is determined under calibration conditions, when a known mass flow Qc flows through inlet tube part 10a, for example from the measured dT under these conditions: Cc=Q/dT. In an embodiment control circuit 19 computes a first ratio R1=U/Ia of strain gauge output signal amplitude U and excitation current Ia, a second ratio R2=Vs/Ia of induction voltage Vs and excitation current Ia. The ratios R1, R2 are computed from measurements during measurements conditions and also under the calibration conditions. Preferably they are performed at the time of measurement and at the time of calibration. As used herein, "at the time of measurement" and "at the time of calibration" means at a time within a time interval wherein measurement or calibration is performed, the time interval having a duration wherein the relevant conditions do not change significantly, e.g. the calibration factor varies less than 1 percent. Under usual conditions this means that a reliable correction of the calibration factor at the time of measurement can be obtained from measurements at any time within a few minutes, say 10 minutes, from the actual flow measurement. The resonance frequency is determined under one or both conditions. The ratios and resonance frequency under calibration conditions will be referred to as R1c, R2c, fc. When an unknown mass flow F occurs, control circuit 19 determines the ratios R1, and R2 and the resonance frequency f from measurements under the actual measurement conditions. Control circuit 19 determines the calibration factor C under measurement conditions from

$$C^2 = Cc^2 * X/Xc$$

Control circuit 19 determines mass flow Q=C*dT from this calibration factor and the time difference dT. The correction terms X, Xc are determined from

$$X = R1^2 * (f^2 - fo^2)^2 / fo^4 + R2^2 * A^2 * f^2$$

$$Xc = R1c^2 * (fc^2 - foc^2)^2 / foc^4 + R2c^2 * A^2 * fc^2$$

Herein f and fc are the frequency at which the tube parts are excited by the actuators during actual measurement and calibration. Typically, the resonance frequency of an even vibration mode is used. Fo, foc are the resonance frequency of the odd vibration mode that is excited through the effect of the Coriolis force during actual measurement and calibration. In an approximation it may be assumed that fo=foc. The resonance frequency fo may be determined experimentally during calibration, for example by exciting the tube in the odd mode at a series of frequencies and measuring the frequency of maximum response, or by observing the frequency of decaying vibrations in this mode after any form of excitation, for example in response to a force step. The relative weight factor "A" may be determined during calibration from the quality factor W of the odd vibration mode, according to

$$A = (R1c/R2c)/(fo*W)$$

The quality factor W, or the factor fo*W can be measured during calibration, for example by measuring the decay time of oscillations of the tube at the frequency fo, or by exciting the tube in the odd vibration mode at a series of frequencies around fo and measuring width of the peak in the response as a function of frequency.

The preceding expression is for the case where the same phase point is used to determine the time difference during calibration and actual measurement. If the phase points differ, an additional correction is needed.

$$C^2 = Cc^2 * X/Xc *$$
$$(\cos 2*pi*f*t/ \cos 2*pi*fc*tc) * (\cos(2*pi*fc*tc-d)/\cos(2*pi*f*t-d) )$$

Herein t represents the phase point of the measurement and d is a phase lag term. In an embodiment the phase lag term d is corrected so that cos (d) changes in proportion to changes in $(f^2-fo^2)* R1$.

As may be noted, both terms R1 and R2 are inversely proportional to the excitation current Ia. Therefore this current can be removed from X and Xc and used as an extra factor, using versions X', Xc' of X and Xc wherein R1, R1c are replaced by U and Uc, or any quantity proportional to the compression amplitude of the mode separation at the time of measurement and calibration and wherein R2, R2c, are replaced by Vs or any other quantity proportional to the vibration amplitude of a tube part 12a or the symmetric vibration amplitude of the combination of the tubes:

$$C^2 = Cc^2 * (Iac/Ia)^2 * X'/Xc'$$

with

$$X' = U^2 *(f^2-fo^2)^2 / fo^4 + Vs^2 *A^2*f^2$$

$$Xc' = Uc^2 * (fc^2-foc^2)^2 / fo^4 + Vsc^2*A^2*fc^2$$

When the same excitation current is used during measurement and calibration, the factor Iac/Ia can be ignored.

It may be noted that the ratio X/Xc will not be affected when the ratio's R1 and/or R2 change by respective factors, as long as A is changed according to these factors and as long as the factors are the same for the calibration measurement and the actual measurement. As a result, the correction does not depend on the specific way in which the ratio's R1 and R2 are determined. For example, a different sensor may be used instead of strain gauge 18, because this merely results in a same factor for all values of R1, which does not affect the correction. Similarly, another indication of excitation strength may be used instead of the current Ia in the determination of R1 and R2, as this does not affect the correction, or if the excitation strength is regulated to a constant value it may be ignored. This allows for considerable flexibility in the selection of parameters.

Concentrating on the dependence on the measurement U of extension and compression of the mode separation plate, to which the ratio R1 is proportional, the expression can be rewritten as

$$C^2 = Cc^2 * ( p* U^2 + q )/ ( pc* Uc^2 + qc )$$

Herein U and Uc are the measurements of the extension and compression of the mode separation plate obtained for actual measurements and for calibration respectively. The other terms p, pc, q, qc depend on other measurements, as can be derived from the previous expressions, remembering that these terms need only be determined up to an arbitrary common factor.

Furthermore, it should be noted that not all terms in the correction may be of equal importance. Dependent on circumstances some of the terms may be omitted. For example, if the quality W is very high, the correction dependent on R2 may be omitted. In this case the calibration factor may be determined from

$$C = Cc * (R1/R1c) * sqrt ( (f^2 - fo^2) / (fc^2 - foc^2) )$$

(Herein sqrt is the square root function). When the change in frequency f between measurement and calibration may be neglected, this correction can be simplified even further. Conversely if the change in R1/R1c is small a similar simplification can be realized. In each case, one or more of the parameters R1, R2 and f are measured in addition to the time different dT and used to correct the calibration factor. In a further embodiment, the quality factor W may also be measured during calibration and at or near the time of actual flow measurements. In this case the factor A may also be adapted. Similarly fo may be determined and changes in fo may be used to correct the calibration factor.

Again concentrating on the dependence on the measurement U of extension and compression, it may be noted that a good approximation of the correction can be obtained by assuming that R2 is proportional to R1/(fo*W). In this case the correction becomes

$$C = Cc * U/Uc * (Iac/Ia) * Z/Zc$$

Herein Z and Zc depend on the frequencies, with

$$Z = sqrt((f^2 - fo^2)^2 /fo^4 + f^2 / (fo*W)^2).$$

Zc is similar, but for the use of frequencies during calibration.

The determination of the modified calibration factor applies the insight that the Coriolis effect on the vibration is inversely proportional to an excitation sensitivity of the odd mode. For any vibration mode this sensitivity frequency will be approximately proportional to the square root of

$$I^2 (f^2 - fo^2)^2 + Cf^2$$

Herein $I^2$ may be attributed to the inertia (mass) of the tube in the mode and C may be attributed to damping of the tube in the mode. The frequency fo depends on the stiffness and inertia of the tube in the mode. External factors affect the Coriolis effect through changes in the stiffness, inertia and damping. At the same time, the first ratio R1=U/Ia depends on stiffness, and the second ratio R2=Vs/Ia depends on damping.

Therefore, the change in the calibration factor due to external factors can be accounted for by using the resonance frequency, and the first and second factors R1, R2 to account for changes in stiffness, inertia and damping. For this, it is not necessary to know stiffness, inertia and damping exactly. Up to a first sensitivity factor, the changes in $I^2$ are proportional to the changes in $R1^2 /fo^4$. Similarly the changes in C are proportional to changes in R2 up to a second sensitivity factor. Only the ratio between the two sensivity factors is needed and this ratio can be determined from the ratio of R1 and R2 during calibration, using the quality factor. As a result the change in calibration factor can be estimated from measurements of R1 and R2 during calibration and during measurement.

It should be noted that this approach is not limited to any specific way of determining mass flow using excitations of the tube, such as determination from time differences. An appropriate calibration factor relating a measured quantity to mass flow is needed for any type of measurement. For each type of measurement a model can be made of how the calibration factor theoretically depends on inertia, stiffness and damping parameters, even if the values of these parameters are not known. This leads to a formula for the calibration factor with these parameters. Measurable quantities in the model are identified that are expected to vary in proportion to inertia, stiffness and damping parameters, including for example the compression and extension amplitude of a mode separation connection. The calibration factor by is then corrected with a ratio between the formulas at calibration and actual measurement, with inertia, stiffness and damping parameters varied in proportion to measurements of the identified parameters. The model, the resulting formula for the way in which the calibration factor depends on inertia, stiffness and damping parameters and frequency may be different from the formula used in the preceding, as it may depend on the measurement configuration. However, in most practical configurations this leads to the same correction formula as discussed in the preceding.

In summary, measurement of mass flow involves performing calibration measurements when a reference mass flow is supplied to the inlet tube part 10a and performing actual measurements when a mass flow that has to be measured is supplied to inlet tube part 10a. As in conventional Coriolis mass flow measurements, calibration measurements and the actual measurements involve measurements of a parameter that varies as consequence of mass flow per se, such as the phase difference between the vibration amplitude at different points on the intermediate tube parts 12a,b. In addition, the calibration measurements and the actual measurements involve parameters that do no vary as a result of mass flow per se, or vary only very marginally. These parameters include a compression and extension amplitude on a mode separation plate 14.

The parameter that varies as consequence of mass flow is used to compute the measured mass flow during an actual measurement, but this computation is adapted dependent on the parameters during an actual measurement that do no vary as a result of mass flow per se. This is done in a way that accounts for changes in the calibration factor that relates the parameter that varies as consequence of mass flow to the actual mass flow. In a typical example, the calibration factor is adapted according to the above-mentioned formula.

$$C^2 = C_c{}^2 * X/X_c$$

Wherein X and Xc vary proportionally to variation of a quantity that is proportional to the square compression and extension amplitude on a mode separation plate 14.

It may be noted that preferably a mass flow of known size is used during the calibration measurements. But if only relative mass flow sizes are needed any reference mass flow may be used during the calibration measurements. In this case the reference mass flow size need not be known. In an embodiment pairs of mass flows at different times are compared by using measurements a first time point as calibration measurement and the measurement at a second time point as actual measurement, for computing a ratio between the mass flows at the first and second time points.

The calibration measurements are preferably performed before the actual measurements, so that the mass flow can be computed immediately after the actual measurements. However, alternatively the calibration measurements may be performed after the actual measurements. This permits subsequent computation of the mass flow, provided that measurements of the parameters needed for correction of the calibration, including the parameters that do no vary as a result of mass flow per se, are retained at least until the computation of mass flow.

Although a specific embodiment has been disclosed, it should be appreciated that the same result can be realized by various alternatives. For example, although a single actuator 15 and two vibration sensors 16 have been shown, acting on the first intermediate tube part 12a, it should be appreciated that instead vibration sensors 16 may act on second intermediate tube part 12b. Also a plurality of actuators and/or vibration sensors acting on both the first and second intermediate tube part 12a,b may be used. Also, a differential actuator 15 and/or vibration sensors 16, acting between the first and second intermediate tube part 12a,b may be used.

As another example, although an embodiment has been shown wherein the calibration factor is adapted based on a sum of terms alternatively, various alternative expressions may be used that result approximately the same result in linear approximation in changes in the parameters that are used to correct the calibration factor. When the changes are small, the result is approximately equivalent. Feed back control systems may be provided to regulate the resonance frequency, the compression and extension amplitude of a mode separation plate, the excitation amplitude and/or the vibration amplitude to predetermined values, for example by heating/cooling the intermediate tube parts 12a,b. When a number of these parameters are regulated, these need not be explicitly accounted for in the correction of the calibration factor.

Alternatively, the effect of external conditions such as temperature on part of the parameters, resonance frequency, compression and extension amplitude of a mode separation plate, excitation amplitude and vibration amplitude, may be accounted for by means of lookup tables, or mathematical formulas that represent these parameters as a function of the external conditions. By using a physical measurement of one of the parameters, such as the compression and extension amplitude of a mode separation plate, the compensation is made more accurate.

As another example, although an embodiment with an inductive vibration sensor 16 has been described, any other type of vibration sensor may be used. Instead of the current through such an inductive vibration sensor any other signal that is proportional to vibration amplitude may be used. When an inductive vibration sensor 16 is used, instead of induction voltage a current needed to compensate the voltage may be measured instead. Similarly, instead of an inductive actuator 15 any other type of actuator may be used. Instead of the current through such an inductive actuator 15 any other signal that is proportional to the vibration excitation force may be used. Also, instead of strain gauge 18 any compression/stretching sensor may be used.

Because the correction is not affected if the relevant parameter change by a factor, no additional calibration factors are needed for the measurements that are used for correcting the calibration factor C.

Although control circuit 19 preferably is implemented as a local circuit, located near to the tube, is should be appreciated that alternatively it may be located at a distance, or it may be a distributed circuit. For example, the measurements regarding frequency dependence, excitation force, vibration amplitudes and compression could be collected and stored or transmitted, for performing the computation of mass flow with the adapted calibration factor later or elsewhere.

It is advantageous to use a configuration with mode separation plates 14 and a compression/stretching sensor like strain gauge 18 on such a mode separation plate 14. Because the mode separation plate 14 is easily stiffer than first and second intermediate tube part 12a,b, measurements on the mode separation plate 14 is especially suited for measuring a parameter proportional to mass. Instead of plates other stiff connections between first and second intermediate tube part 12a,b may be used. These plates or connections are distinguished from clamping elements, because they couple the intermediate tube parts without fixing them to the outside frame (not shown), allowing symmetric vibrations at the point of attachment.

Although a configuration with two intermediate tube parts 12a,b has been shown, it should be appreciated that alternatively a greater number may be used. Also, although a combination is shown wherein an inlet flow is split and fractions of the flow are passed through the intermediate tube parts 12a,b, it should be appreciated that the flows through intermediate tube parts 12a,b may come from different sources, or that the same flow could be conducted through intermediate tube parts 12a,b successively.

## Claims

**1.** A Coriolis mass flow meter for measuring a mass flow, the mass flow meter comprising

- a first and second tube part, for conducting respective parts of the mass flow in parallel with each other;
- a mechanical connection between the first and second tube part that obstructs relative movement of the tube parts in mutually opposite directions, while allowing movement of the tube parts in a same direction;
- an actuator coupled to the first tube part, for exciting vibration of the first and second tube parts;
- vibration sensors coupled to the first and/or second tube part for measuring a parameter of the vibrations that depends on the mass flow;
- a compression sensor coupled to the mechanical connection, for measuring compression amplitude of the mechanical connection;
- a control circuit configured to compute a size of the mass flow under measurement conditions relative to a calibration mass flow under calibration conditions, from measurements of the parameter that depends on mass flow under the measurement conditions, with an additional correction factor that is computed dependent on compression amplitudes of the mechanical connection under the measurement and calibration conditions.

**2.** A Coriolis mass flow meter according to claim 1, wherein the correction factor corresponds to a square root of a ratio of terms that change by amounts proportional to squares of the compression amplitudes of the mechanical connection under the measurement and calibration conditions respectively.

**3.** A Coriolis mass flow meter according to claim 2, wherein the correction factor corresponds to a ratio of the compression amplitudes of the mechanical connection under the measurement and calibration conditions respectively.

**4.** A Coriolis mass flow meter according to claim 1 or 2, wherein the correction factor corresponds to a square root of a ratio of terms that change by amounts proportional to squares of a vibration amplitude of the first and/or second tube part under the measurement and calibration conditions respectively.

**5.** A Coriolis mass flow meter according to claim 2, wherein the control circuit is configured to adapt a calibration factor C according to

$$C^2 = Cc^2 * X/Xc$$

with terms X and Xc according to

$$X = R1^2 \, (f^2 - fo^2)^2 \, / f^4 + R2^2 \, A^2 * fo^2$$

$$Xc = R1c^2 \, (fc^2 - foc^2)^2 \, / f^4 + R2c^2 \, A^2 * foc^2$$

wherein

- Cc is the calibration factor at the time of calibration,
- R1 and R1c are determined proportional to compression amplitude of the mechanical connection under the measurement and calibration conditions respectively,
- R2 and R2c are determined proportional to a vibration amplitude of the first and/or second tube part under the measurement and calibration conditions respectively,
- f and fc are an excitation frequency under the measurement and calibration conditions respectively and
- fo and foc are a resonance frequency of a vibration mode that is excited through the action of the mass flow under the measurement and calibration conditions respectively,
- the factor A being determined from a ratio of R1c and R2c divided by a quality factor of a resonance of said vibration mode.

**6.** A Coriolis mass flow meter according to claim 4 or 5 wherein at least one of the vibration sensors comprises a pick-up coil, located to pick up magnetic flux variations related to the vibration amplitude of the first and/or second tube part, the control circuit being configured to determine an induction voltage generated in the pick-up coil at the time of measurement and the time of calibration.

**7.** A Coriolis mass flow meter according to any one of the preceding claims wherein the compression sensor comprises a strain gauge connected to the mechanical connection.

**8.** A Coriolis mass flow measurement method, comprising determination of combined mass flow through a combination of a first and second tube part that are coupled by a mode separation connection that obstructs relative movement of the tube parts in mutually opposite directions, while allowing movement of the tube parts in a same direction, the method comprising

- performing first and second measurements, under the measurement and calibration conditions respectively, the measurements each comprising
- exciting vibrations of the first and second tube parts;
- measuring a parameter of the vibrations of at least one of the tube parts that depends on the mass flow;
- measuring compression amplitude of the mode separation connection due to the vibration; the method comprising
- computing a size of the mass flow at the time of measurement relative to a calibration mass flow at the time of calibration, from the parameter that depends on mass flow under the measurement conditions, with an additional correction factor that is computed dependent on compression amplitudes of the mechanical connection under the measurement and calibration conditions.

**8.** A method according to claim 7, wherein the correction factor corresponds to a square root of a ratio of terms that change by amounts proportional to squares of the compression amplitudes of the mechanical connection under the measurement and calibration conditions respectively.

**9.** A computer program product for computing mass flow from a Coriolis mass flow measurement comprising determination of combined mass flow through a combination of a first and second tube part that are coupled by a mode separation connection that obstructs relative movement of the tube parts in mutually opposite directions, while allowing movement of the tube parts in a same direction, the computer program product comprising instructions that, when executed by a programmable computer, cause the computer to

- receive measurements of a parameter of the vibrations of at least one of the tube parts that depends on mass flow;
- receive measurements of compression amplitude of the mode separation connection due to the vibration;
- compute a size of the mass flow at the time of measurement relative to a calibration mass flow at the time of calibration, from measurements of a the parameter that depends on mass flow under the measurement conditions, with an additional correction factor that is computed dependent on compression amplitudes of the mechanical connection under the measurement and calibration conditions.

**10.** A computer program product according to claim 9, wherein the correction factor corresponds to a square root of a ratio of terms that change by amounts proportional to squares of the compression amplitudes of the mechanical connection under the measurement and calibration conditions respectively.

Fig.1

**European Patent Office**

## EUROPEAN SEARCH REPORT

Application Number

EP 07 11 3134

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/151369 A1 (BITTO ENNIO [CH] ET AL) 5 July 2007 (2007-07-05) | 1-7 | INV.<br>G01F1/84 |
| A | * page 6, paragraph 56 - page 7, paragraph 63; figures 2-6 * | 8-10 | G01F15/02<br>G01F25/00 |
| | ----- | | |
| X | US 2005/252307 A1 (ANDRESEN RIKKE V [DK] ET AL ANDRESEN RIKKE VESTERBAEK [DK] ET AL) 17 November 2005 (2005-11-17) | 1-7 | |
| A | * page 2, paragraph 34 - page 4, paragraph 50; figures 2,5 * | 8-10 | |
| | ----- | | |

TECHNICAL FIELDS SEARCHED (IPC)

G01F

The present search report has been drawn up for all claims

| Place of search | Date of completion of the search | Examiner |
|---|---|---|
| The Hague | 10 December 2007 | Boerrigter, Herman |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 11 3134

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2007

| Patent document cited in search report | Publication date | Patent family member(s) | | Publication date |
|---|---|---|---|---|
| US 2007151369 A1 | 05-07-2007 | NONE | | |
| US 2005252307 A1 | 17-11-2005 | AU | 2003250318 A1 | 03-03-2004 |
| | | DE | 10237209 A1 | 11-03-2004 |
| | | WO | 2004017027 A1 | 26-02-2004 |
| | | EP | 1529200 A1 | 11-05-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1623192 A